# EUROPÄISCHE PATENTSCHRIFT

(11) **EP 0 911 749 B1**
(45) Veröffentlichungstag und Bekanntmachung des Hinweises auf die Patenterteilung: **15.09.2004**
(21) Anmeldenummer: 98114615.2
(22) Anmeldetag: 04.08.1998
(51) Int. Cl.: G06K 7/00

(54) **Chipkarten-Kontaktiereinheit**
Chipcards-contacting unit
Unité de connexion pour cartes à puce

(30) Priorität: 22.10.1997 DE 29718773 U
(43) Veröffentlichungstag der Anmeldung: 28.04.1999
(73) Patentinhaber: STOCKO Contact GmbH & Co. KG, 42327 Wuppertal (DE)
(72) Erfinder: Ungermann, Heinz, 63389 Linsengericht (DE); Bäcker, Arnd, 53940 Hellenthal (DE); Klatt, Dieter, 42489 Wülfrath (DE)
(74) Vertreter: Stenger, Watzke & Ring Patentanwälte

(56) Entgegenhaltungen:
- WO-A-97/20283
- FR-A- 2 615 660
- FR-A- 2 737 321

## Beschreibung

Die Erfindung betrifft eine Chipkarten-Kontaktiereinheit, bei der das Kontaktfeld der Chipkarte über Kontakte mit der Leiterplatte der Kontaktiereinheit elektrisch und mechanisch verbunden ist, wobei zur Sicherstellung der Kontaktierposition der Chipkarte in bezug auf die Kontakte ein Schalter mit einem die axiale Einschubbewegung der Chipkarte begrenzenden Anschlag vorgesehen ist, wobei zusätzlich zu dem Axial-Anschlag ein Führungsmittel für die Chipkarte vorgesehen ist, welches die Einschubbewegung der Chipkarte in die Kontaktierposition auf der dem Kontaktfeld der Chipkarte gegenüberliegenden Seite nach Art eines Widerlagers führt.

Aus der internationalen Patentanmeldung WO 95/33243 ist eine Chipkarten-Kontaktiereinheit bekannt, welche z. B. im Rahmen von Bankgeschäften, Pay TV sowie als Zugangsberechtigung für Datennetze, Personalcomputer und dgl. in Form von Lesegeräten verwendet wird. Bei mobilen Chipkartenlesegeräten und auch Mobiltelefonen in Verbindung mit SIM Karten ist durch die miniaturisierte Bauform eine sehr genaue Schaltfunktion erforderlich, da die Toleranzen zueinander (Gehäuse, Leiterplatte und Kontaktierung) die Schaltfunktion und Sicherheit erheblich beeinflussen. Zur Sicherstellung der Kontaktierposition und Funktion von Chipkarte und Kontaktiereinheit zueinander ist der Schalter vorgesehen, der praktisch die Anwesenheit einer Chipkarte in der Chipkarten-Kontaktiereinheit feststellt, indem mit der vorderen transversalen Kante der Chipkarte ein Mittel zur Schaltersteuerung, wie beispielsweise eine Schaltfeder oder ein Schalthebel, betätigt wird, so daß nur nach dieser Kooperation ein Signaltransfer von der Leiterplatte zur Chipkarte und umgekehrt stattfinden kann.

Über den Schalter wird der Chipkarten-Kontaktiereinheit gemeldet, daß die Chipkarte eingeschoben und in der richtigen Kontaktierposition befindlich ist und sodann einen Datentransfer ermöglicht ist.

Nachteilig ist bei der bekannten Chipkarten-Kontaktiereinheit, daß die eingeschobene Chipkarte in ihrer Positionierung allein durch den die Axialbewegung begrenzenden Anschlag nicht genau genug geführt ist und sich nicht zwangsläufig immer in der geforderten Schaltposition befindet. Somit besteht die Gefahr, daß sich die Chipkarte außerhalb der Schalthysterese in der eingeschobenen Position befindet und ein Datentransfer unmöglich gemacht wird. Insbesondere können bei ungünstigen Positioniertoleranzen, z. B. der Leiterplatte zum Gehäuse, Überschiebungen der Chipkarte über den Anschlag stattfinden, so daß das Kontaktfeld der Chipkarte von den mit der Leiterplatte verbundenen Kontaktfedern abgehoben wird und Schaltfehler auftreten. Auch können Vibrationen und Erschütterungen ein selbständiges Lösen der Chipkarte aus der Kontaktierposition verursachen. Eine gattungsgemäße Chipkarten-Kontaktiereinheit ist auch aus der FR-A-2 737 321 bekannt. Diese ist jedoch aufwendig in der Fertigung und weist Nachteile in ihrer Funktionssicherheit auf. Eine Chipkarten-Kontaktiereinheit gemäss dem Oberbegriff des Anspruchs 1 ist aus FR-A-2 737 321 bekannt.

Der Erfindung liegt in Anbetracht dieses Standes des Technik die Aufgabe zugrunde, eine einfache Unterbringung des zusätzlichen Führungsmittels innerhalb der, insbesondere bei mobilen Chipkarten-Lesegeräten, sehr engen Gehäuseabmessungen zu gewährleisten, ohne die vertikalen Abmessungen zu vergrößern und dabei gleichzeitig die Funktionssicherheit von Chipkarten-Lesegeräten zu verbessern und die Kontaktsicherheit bei der Positionierung einer in die Kontaktiereinheit eingeschobenen Chipkarte zu erhöhen.

Die Aufgabe ist an einer Chipkarten-Kontaktiereinheit der eingangs genannten Art ertindungsgemäss dadurch gelöst, dass in der zu dem zusätzlichen Führungsmittel benachbarten Gehäuseplatte der Kontaktiereinheit eine Ausnehmung oder ein Fenster vorgesehen ist, in das das Führungsmittel ganz oder teilweise eingreift.

Mit der Erfindung wird jegliches Abheben der Chipkarte in der Kontaktierposition vom Schalter vermieden und ein Ausweichen der Chipkarte nach oben in vertikaler Richtung verhindert, was insbesondere dann von Bedeutung ist, wenn die Kontakte der Leiterplatte als Kontaktfedern ausgebildet sind, die aufgrund ihrer Federwirkung vertikale Kräfte auf das Kontaktfeld der eingeschobenen Chipkarte ausüben. Darüber hinaus ist die Chipkarten-Kontaktiereinheit einfach und kostengünstig herstellbar.

Vorzugsweise ist das Führungsmittel ein auf die dem Kontaktfeld der Chipkarte gegenüberliegende Oberfläche einwirkender Niederhalter, der zweckmäßigerweise am Axial-Anschlag in Form eines die vordere Querseite der Chipkarte übergreifenden Flachstücks ausgebildet ist.

Gemäß einer bevorzugten Ausführungsform der Erfindung ist das Führungsmittel mit einer die Vorderkante der eingeschobenen Chipkarte führenden Einschubschräge versehen und kann die von dem Führungsmittel ausgeübte Klemmfunktion dadurch erhöht werden, daß das Führungsmittel in Form einer aus Kunststoff oder Metall bestehenden elastischen Feder ausgeführt ist. Damit übernimmt das Führungsmittel eine aktive Klemmfunktion für die Chipkarte, mit der das bislang mögliche selbständige Lösen der Chipkarte aus der Kontaktierposition z. B. durch Vibration und Erschütterung sicher verhindert ist.

Bevorzugt wird die erfindungsgemäße Chipkarten-Kontaktiereinheit an PCMCIA Chipkartenlesegeräten Verwendung finden, da hier extreme Toleranzprobleme aufgrund der Normierung der Abmessungen bestehen, die beispielsweise die Verwendung von seitlichen Führungsmitteln für die einzuschiebende Chipkarte unmöglich macht, wobei zusätzliche aufgrund des mobilen Einsatzes erhöhte Anforderungen an eine sichere Kontaktpositionierung gestellt werden.

Insgesamt wird durch die erfindungsgemäß vorgesehene zusätzliche Schalterführung erreicht, daß im Bereich des Endschalters die Kontaktsicherheit erheblich verbessert wird, so daß externe System- und Gerätetoleranzen nicht mehr in die Funktionssicherheit der Chipkarten-Kontaktiereinheit eingreifen (eigensichere Funktion), die Chipkarte genügend Vibrationen und Erschütterungen gesichert ist, wobei durch die Widerlager- bzw. Niederhalterfunktion auch die Lötanschlüsse des Schalters mechanisch entlastet werden und das Modul im offenen Zustand vor der Schließung des Gehäuses elektrisch und mechanisch getestet werden kann, was zu erheblichen Kosteneinsparungen bei der Montage und zur Verringerung von Ausschuß führt.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer PCMCIA-Chipkartenkontaktiereinheit schematisch dargestellt ist. In der Zeichnung zeigt:
- Fig. 1: eine PCMCIA-Chipkarten-Kontaktiereinheit in einer Seitenansicht unter Weglassung von Gehäuseteilen, um den Innenaufbau zu verdeutlichen;
- Fig. 2: eine Seitenansicht des Schalters und
- Fig. 3: den Schalter in einer perspektivischen Gesamtansicht.

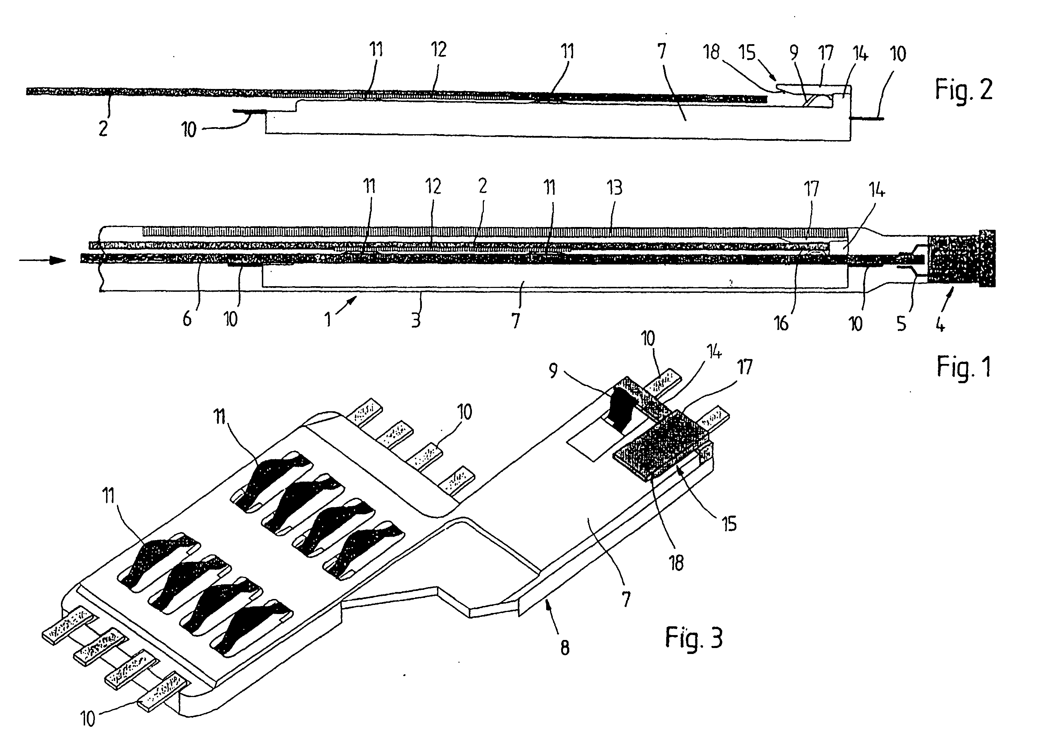

Die in Fig. 1 der Zeichnung dargestellte PCMCIA-Chipkarten-Kontaktiereinheit 1 stellt eine PCMCIA-Leseeinheit zum Anschluß an einen Personal-Computer, ein Notebook oder dergleichen nicht dargestelltes Datenverarbeitungssystem mit PCMCIA-Anschluß dar, wobei nur der vordere Bereich eingezeichnet ist und Gehäuseteile weggelassen sind, um einen Einblick in das Innere der Kontaktiereinheit zwecks Verdeutlichung des schematischen Aufbaus zu ermöglichen. In die Kontaktiereinheit 1 ist eine Chipkarte 2 gemäß ISO 7816 eingeschoben und befindet sich in Kontaktierposition. Es ist erkennbar, daß innerhalb eines steckkartenförmigen Außengehäuses 3 stirnseitig eine PCMCIA-Anschlußbuchse 4 bekannter Art mit 68 genormten Anschlüssen angeordnet ist. Diese sind über Lötanschlüsse 5 mit einer elektronische Bausteine tragenden Leiterplatte 6 und nicht dargestelltem integriertem Schaltkreis verbunden. Auf der Leiterplatte 6 oder einem entsprechend geformten Fenster der Leiterplatte 6 ist ein Kunststoffkörper 7 angeordnet, der einen Schalter 8 trägt, dessen Schaltfeder 9 insbesondere aus Fig. 3 der Zeichnung gut ersichtlich ist. Der Schalter ist über Lötanschlüsse 10, die im Kunststoffkörper 7 gehalten sind, elektrisch und mechanisch mit der Leiterplatte 6 verbunden, wobei hochstehende Kontaktfedern 11 vorgesehen sind, eine Kontaktierung mit dem Kontaktfeld 12 der eingeschobenen Chipkarte 2 herzustellen.

Zwischen der Chipkarte 2 und dem Außengehäuse 3 befindet sich an der in der Zeichnung oberen Seite des Gehäuses eine Verstärkerplatte 13, die sich zumindest über den Kontaktierungsbereich der Chipkarte 2 mit der Leiterplatte 6 erstreckt.

Bei der Chipkarten-Kontaktiereinheit 1 wird das Kontaktfeld 12 der Chipkarte 2 über die Kontaktfedern 11 und die Lötanschlüsse 10 mit der Leiterplatte 6 elektrisch und mechanisch verbunden und ist zur Sicherstellung der Kontaktierposition der Chipkarte 2 mit ihrem Kontaktfeld 12 in bezug auf die Kontaktfedern 11 der Schalter 8 mit Schaltfeder 9 in dem Kunststoffkörper 7 vorgesehen, der mit einem die axiale Einschubbewegung (Pfeil) der Chipkarte 2 begrenzenden Anschlag 14 versehen ist.

Parallel mit Abstand zum Kunststoffkörper 7 erstreckt sich oberhalb des Axial-Anschlags 14 in einstückiger Ausbildung mit dem Kunststoffkörper 7 und dem Axial-Anschlag 14 ein zusätzliches Führungsmittel 15 in Form eines die vordere Querseite 16 der eingeschobenen Chipkarte 2 übergreifenden stegartigen Flachstücks 17, dessen rückwärtiger Bereich mit einer Einschubschräge 18 versehen ist, die mit der vorderen Transversal-Kante der in der Einschubbewegung befindlichen Chipkarte 2 zusammenwirkt.

Beim Einschieben der Chipkarte 2 in die Kontaktiereinheit wird die Vorderkante der Chipkarte 2 von der Einschubschräge 18 des Flachstücks 17 erfaßt und in den Spalt zwischen dem Flachstück 17 und der angrenzenden Oberfläche des Kunststoffkörpers 7 des Schalters 8 eingeführt. Im Rahmen der weiteren Vorwärtsbewegung der eingeschobenen Chipkarte 2 wird die Schaltfeder 9 heruntergedrückt und damit der Schalter 8 betätigt, wobei die Vorwärtsbewegung der Chipkarte 2 am Axial-Anschlag 14 durch Anstoßen der Vorderkante der Chipkarte 2 beendet wird. In dieser durch axiale Bewegungsbegrenzung und vertikaler Positionierungssicherung vorgegebenen Endposition der Chipkarte 2 stehen das Kontaktfeld 12 und die Kontaktfedern 11 in der exakten Kontaktierungsposition zueinander. Dabei wirkt das Flachstück 17 gegen die Wirkung der Kontaktfedern 11 und der Schaltfeder 9 als Widerlager und Niederhalter der Chipkarte und übt eine Klemmfunktion aus.

Um die Abmessungen des Außengehäuses 3 unverändert halten zu können, ist in der Verstärkungsplatte 13 eine der Größe des Flachstücks 17 entsprechende Ausnehmung vorgesehen, die in der Zeichnung nicht erkennbar ist, in die das Flachstück 17 teilweise eingreift, wie durch Vergleich der Darstellung in Fig. 1 und Fig. 2 ersichtlich wird.

### Bezugszeichenliste

- 1: Kontaktiereinheit
- 2: Chipkarte
- 3: Außengehäuse
- 4: PCMCIA-Buchse
- 5: Lötanschlüsse
- 6: Leiterplatte
- 7: Kunststoffkörper
- 8: Schalter
- 9: Schaltfeder
- 10: Lötanschlüsse
- 11: Kontaktfedern
- 12: Kontaktfeld
- 13: Verstärkungsplatte
- 14: Axial-Anschlag
- 15: Führungsmittel
- 16: vordere Querseite
- 17: Flachstück
- 18: Einschubschräge

## Patentansprüche

1. Chipkarten-Kontaktiereinheit (1), bei der das Kontaktfeld (12) der Chipkarte (2) über Kontakte (11) mit der Leiterplatte (6) der Kontaktiereinheit elektrisch und mechanisch verbunden ist, wobei zur Sicherstellung der Kontaktierposition der Chipkarte (2) in bezug auf die Kontakte (11) ein Schalter (8) mit einem die axiale Einschubbewegung der Chipkarte (2) begrenzenden Anschlag (14) vorgesehen ist, wobei zusätzlich zu dem Axial-Anschlag (14) ein Führungsmittel (15) für die Chipkarte (2) vorgesehen ist, welches die Einschubbewegung der Chipkarte (2) in die Kontaktierposition auf der dem Kontaktfeld (12) der Chipkarte (2) gegenüberliegenden Seite nach Art eines Widerlagers führt,
**dadurch gekennzeichnet,**
**dass** in der zu dem zusätzlichen Führungsmittel (15) benachbarten Gehäuseplatte der Kontaktiereinheit eine Ausnehmung oder ein Fenster vorgesehen ist, in das das Führungsmittel (15) ganz oder teilweise eingreift.

2. Chipkarten-Kontaktiereinheit nach Anspruch 1, **dadurch gekennzeichnet, dass** sich die Ausnehmung oder das Fenster in einer seitens der Gehäuseplatte vorgesehenen Verstärkungsplatte (13) befindet.

3. Chipkarten-Kontaktiereinheit nach Anspruch 1 oder Anspruch 2, **dadurch gekennzeichnet, dass** das Führungsmittel (15) ein auf die dem Kontaktfeld (12) der Chipkarte (2) gegenüberliegende Oberfläche der Chipkarte (2) einwirkender Niederhalter ist.

4. Chipkarten-Kontaktiereinheit nach einem der Ansprüche 1 bis 3, **dadurch gekennzeichnet, dass** das Führungsmittel (15) am Axial-Anschlag (14) in Form eines die vordere Querseite (16) der Chipkarte (2) übergreifenden Flachstücks (17) ausgebildet ist.

5. Chipkarten-Kontaktiereinheit nach einem der Ansprüche 1 bis **4, dadurch gekennzeichnet, dass** ein Kunststoffkörper (7) den Schalter (8) und die Kontakte (11) trägt und dass mit dem Kunststoffkörper (7) einstückig der Axial-Anschlag (14) und das Führungsmittel (15), vorzugsweise in Form des Flachstücks (17) ausgebildet ist.

6. Chipkarten-Kontaktiereinheit nach einem der Ansprüche 1 bis 5, **dadurch gekennzeichnet, dass** das Führungsmittel (15) mit einer die Vorderkante der eingeschobenen Chipkarte (2) führenden Einschubschräge (18) versehen ist.

7. Chipkarten-Kontaktiereinheit nach einem der Ansprüche 1 bis 6, **dadurch gekennzeichnet, dass** das Führungsmittel (15) die Form einer aus Kunststoff oder Metall bestehenden elastischen Feder hat.

8. Chipkarten-Kontaktiereinheit nach einem der Ansprüche **1 bis 7**, **gekennzeichnet durch** ihre Anwendung an einem PCMCIA-Chipkartenlesegerät.

9. Chipkarten-Kontaktiereinheit nach einem der Ansprüche 1 bis 8, **dadurch gekennzeichnet, dass** der Schalter (8) vertikal beabstandet zu dem zusätzlichen Führungmittel (15) angeordnet ist.

## Claims

1. A chip card contact unit (1), in which the contact field (12) of the chip card (2) is electrically and mechanically connected to the conductive plate (6) of the contact unit, a switch (8) with a stop (14) limiting the axial insertion movement of the chip card (2) being provided in order to guarantee the contact position of the chip card (2) with respect to the contacts (11) and, in addition to the axial stop (14), a guide (15) being provided for the chip card (2), which guides the insertion movement of the chip card (2) into the contact position on the side opposite to the contact field (12) of the chip card (2) in the manner of an abutment, **characterised in that** provided in the housing plate of the contact unit adjacent to the additional guide (15) there is a recess or a window, into which the guide (15) wholly or partially engages.

2. A chip card contact unit as claimed in Claim 1, **characterised in that** the recess or the window is located in a reinforcing plate (13) provided on the side of the housing plate.

3. A chip card contact unit as claimed in Claim 1 or 2, **characterised in that** the guide (15) is a hold-down device acting on the surface of the chip card (2) opposite to the contact field (12) of the chip card (2).

4. A chip card contact unit as claimed in one of Claims 1 to 3, **characterised in that** the guide (15) on the axial stop (14) is constructed in the form of a flat member (17) engaging over the front transverse side (16) of the chip card (2).

5. A chip card contact unit as claimed in one of Claims 1 to 4, **characterised in that** a plastic body (7) carries the switch (8) and the contacts (11) and that the axial stop (14) and the guide (15) are constructed integrally with the plastic body (7), preferably in the form of the flat member (17).

6. A chip card contact unit as claimed in one of Claims 1 to 5, **characterised in that** the guide (15) is provided with an insertion bevel (18) guiding the front edge of the inserted chip card (2).

7. A chip card contact unit as claimed in one of Claims 1 to 6, **characterised in that** the guide (15) has the form of an elastic spring consisting of plastic material or metal.

8. A chip card contact unit as claimed in one of Claims 1 to 7, **characterised by** its use on a PCMCIA chip card reading device.

9. A chip card contact unit as claimed in one of Claims 1 to 8, **characterised in that** the switch (8) is arranged vertically spaced from the additional guide (15).

## Revendications

1. Unité de connexion de carte à puce (1), dans laquelle la surface de contact (12) de la carte à puce (2) est reliée électriquement et mécaniquement au circuit imprimé (6) de l'unité de connexion par l'intermédiaire de contacts (11), moyennant quoi pour garantir la position de connexion de la carte à puce (2) par rapport aux contact (11), un interrupteur (8) avec une butée (14) limitant le mouvement axial d'insertion de la carte à puce (2), moyennant quoi en plus de la butée axiale (14), un moyen de guidage (15) pour la carte à puce (2) est prévu, qui guide le mouvement d'insertion de la carte à puce (2) vers la position de connexion sur le côté opposé à al surface de contact (12) de la carte à puce (2), à la manière d'une contre palier, **caractérisée en ce que**, dans la plaque de boîtier de l'unité de connexion adjacente au moyen de guidage (15) supplémentaire, un évidement ou une fenêtre est prévue, dans laquelle le moyen de guidage (15) s'emboîte entièrement ou partiellement.

2. Unité de connexion de carte à puce selon la revendication 1, **caractérisée en ce que** l'évidement ou la fenêtre se trouve dans une plaque de renforcement (13) prévue du côté de la plaque de boîtier.

3. Unité de connexion de carte à puce selon la revendication 1 ou 2, **caractérisée en ce que** le moyen de guidage (15) est un serre-flanc agissant sur la surface opposée à la surface de contact (12) de la carte à puce (2).

4. Unité de connexion de carte à puce selon l'une des revendications 1 à 3, **caractérisée en ce que** le moyen de guidage (15) est conçu au niveau de la butée axiale (14) sous la forme d'une pièce plate (17) recouvrant le côté transversal avant (16) de la carte à puce (2).

5. Unité de connexion de carte à puce selon l'une des revendications 1 à 4, **caractérisée en ce qu'**un élément de matière plastique (7) porte l'interrupteur (8) et les contacts (11) et **en ce que**, avec l'élément de matière plastique (7), la butée axiale (14) et le moyen de guidage (15) sont conçus d'un seul bloc de préférence sous la forme d'une pièce plate (17).

6. Unité de connexion de carte à puce selon l'une des revendications 1 à 5, **caractérisée en ce que** le moyen de guidage (15) est muni d'un chanfrein d'insertion (18) guidant l'arête avant de la carte à puce (2) insérée.

7. Unité de connexion de carte à puce selon l'une des revendications 1 à 6, **caractérisée en ce que** le moyen de guidage (15) présente la forme d'un ressort élastique en matière plastique ou en métal.

8. Unité de connexion de carte à puce selon l'une des revendications 1 à 7, **caractérisée par** leur utilisation dans un appareil de lecteur de carte à puce PCMCIA.

9. Unité de connexion de carte à puce selon l'une des revendications 1 à 8, **caractérisée en ce que** l'interrupteur (8) est disposé verticalement à une certaine distance du moyen de guidage (15) supplémentaire.
